# EUROPÄISCHE PATENTANMELDUNG

(11) **EP 1 918 860 A2**
(43) Veröffentlichungstag der Anmeldung: **07.05.2008**
(21) Anmeldenummer: 07118389.1
(22) Anmeldetag: 12.10.2007
(51) Int. Cl.: G06K 19/077

(54) **Transponderanordnung und Verfahren zum Betrieb von Transpondern**

(30) Priorität: 31.10.2006 DE 102006051902
(71) Anmelder: TBN Identifikation und Netzwerke GmbH, 40721 Hilden (DE)
(72) Erfinder: Osmers, Hans, 41470 Neuss (DE); Kern, Peter, 64354 Reinheim (DE)
(74) Vertreter: Seiffert, Klaus

(57) **Zusammenfassung**

Die vorliegende Erfindung betrifft eine Anordnung eines mindestens eine Sensorspule aufweisenden Transponders an einem metallischen Gegenstand. Um eine Transponderanordnung und ein Verfahren zum Betrieb entsprechender Transponder bereitzustellen, welche einerseits an metallischen Gegenständen verwendbar und gleichzeitig klein und kompakt aufgebaut sind und welche dennoch eine relativ große Reichweite von deutlich mehr als 10 cm und vorzugsweise im Bereich von 1 bis 2 m haben, wird erfindungsgemäß vorgeschlagen, daß der Transponder gemäß einer der drei folgenden Varianten an einer freien Kante des Metallteiles angebracht ist:
a) indem die Sensorspule an einer Oberfläche des Metallteiles im Bereich des geschlossenen Endes eines sich in und entlang der Oberfläche des Metallteiles erstreckenden Schlitzes angeordnet ist
b) indem die Sensorspule in der Mitte einer freien Kante des Metallteiles derart angeordnet ist, daß die Querschnittsfläche der Sensorspule die freie Kante überlappt, wobei die Länge der freein Kante in etwa die Hälfte der Wellenlänge der für das Auslesen verwendeten Elektromagnetischen Wellen oder ein ganzzahliges Vielfaches hiervon beträgt
c) indem ein Transponderchip, der zwei elektrisch leitende Anschlußfahnen aufweist, jedoch ohne Antenne oder Empfangsspule über einem durchgehenden Schlitz angeordnet ist, wobei die beiden Anschlußfahnen des Transponderchips beiderseits des Schlitzes unmittelbar auf der Metalloberfläche jedoch gegenüber dieser Metalloberfläche isoliert angebracht ist

## Beschreibung

Die vorliegende Erfindung betrifft eine Anordnung eines Transponders an einem metallischen Bauteil sowie ein Verfahren zum Betreiben bzw. Auslesen von Transpondern an metallischen Bauteilen. Transponder sind im Stand der Technik in vielfältigen Varianten bekannt. Insbesondere sind im Stand der Technik auch sogenannte passive oder "Backscatter"-Transponder bekannt, bei welchen der Code auf einem Chip des Transponders gespeichert ist, wobei dieser Code erfaßt wird, indem eine mit dem Chip verbundene Empfangsantenne elektromagnetische Strahlung innerhalb eines vorgegebenen Frequenzbandes, die von einer Sende- oder Abfrageantenne ausgestrahlt wird, aufnimmt, daraus Energie gewinnt und ihrerseits ein Signal entsprechend dem in dem Chip gespeicherten Code abstrahlt. Dieses kann dann von einer Leseantenne empfangen und in einer zugehörigen Elektronik ausgewertet werden, wobei die Leseantenne mit der den Transponder anregenden, Signal aussendenden Antenne identisch sein kann.

Dabei gibt es unterschiedliche Typen von Transpondern, die mehr oder weniger empfindlich auf elektromagnetische Strahlung reagieren und demzufolge, ausgehend von einer gegebenen Sendeleistung der Abfrage- und Leseelektronik, unterschiedliche Reichweiten haben. Bekannt sind Transponder mit Dipol- oder Ferritantennen, die vornehmlich auf die elektrische Feldkomponente des Sendesignals ansprechen. Diese Antennen sind relativ groß, reagieren aber vergleichsweise empfindlich, so daß bei den in der Praxis zugelassenen Sendeleistungen der Abfragegeräte Reichweiten zwischen 1 und 2 m oder auch darüber ohne weiteres erreichbar sind. Diese Transponder versagen allerdings bei der Anbringung an oder in metallischen Gegenständen, da Metalle elektrische Felder abschirmen. Ein anderer Typ eines Transponders weist eine Sensorspule auf, die aus einer oder mehreren Windungen bestehen kann und die an die Magnetfeldkomponente der elektromagnetischen Strahlung ankoppelt. Derartige Transponder bzw. magnetische Empfangsantennen lassen sich zwar sehr klein und kompakt herstellen und sind insbesondere auch an oder mit Metallen verwendbar, haben allerdings eine sehr geringe Reichweite. D.h., mit den herkömmlichen zugelassenen Sendeleistungen liegen die Reichweiten derartiger sogenannter "magnetischer" Transponder nur bei wenigen Zentimetern (typischerweise maximal 10 cm). Beispielsweise ist aus der DE 100 55 324 A1 eine Transponderanordnung in einem massiven Metallteil bekannt. Dabei liegt eine Spule am Grund eines Einschnittes mit der Spulenachse in Längsrichtung des Einschnittes und parallel zu dessen Grund. Die Spule ist vollständig in dem Einschnitt aufgenommen und kann in dem Einschnitt des Metallteils mit Kunststoff vergossen werden, so dass das Vorhandensein eines Transponders und dessen Position nicht ohne weiteres erkennbar ist.

Der vorliegenden Erfindung liegt vor diesem Hintergrund die Aufgabe zugrunde, eine Transponderanordnung und ein Verfahren zum Betrieb entsprechender Transponder bereitzustellen, welche einerseits an metallischen Gegenständen verwendbar und gleichzeitig klein und kompakt aufgebaut sind und welche dennoch eine relativ große Reichweite von deutlich mehr als 10 cm und vorzugsweise im Bereich von 1 bis 2 m haben.

Gemäß einem ersten Aspekt der Erfindung wird für eine entsprechende Transponderanordnung wird die der Erfindung zugrunde liegende Aufgabe dadurch gelöst, daß der Transponder gemäß einer der drei folgenden Varianten an einer freien Kante des Metallteiles angebracht wird:
a) indem die Sensorspule an einer Oberfläche des Metallteiles im Bereich des geschlossenen Endes eines sich in und entlang der Oberfläche des Metallteiles erstreckenden Schlitzes angeordnet ist
b) indem die Sensorspule in der Mitte einer freien Kante des Metallteiles derart angeordnet ist, daß die Querschnittsfläche der Sensorspule die freie Kante überlappt, wobei die Länge der freien Kante in etwa die Hälfte der Wellenlänge der für das Auslesen verwendeten Elektromagnetischen Wellen oder ein ganzzahliges Vielfaches hiervon beträgt
c) ein Transponderchip, der zwei elektrisch leitende Anschlußfahnen aufweist, jedoch ohne Antenne oder Empfangsspule über einem durchgehenden Schlitz angeordnet ist, wobei die beiden Anschlußfahnen des Transponderchips beiderseits des Schlitzes unmittelbar auf der Metalloberfläche jedoch gegenüber dieser Metalloberfläche isoliert angebracht ist

Dabei erfolgt das Auslesen bzw. Erfassen des Transponders mit einer herkömmlichen Abfrageantenne in einem Abstand, der deutlich größer als 10 cm ist und bevorzugt mindestens 50 cm und insbesondere mindestens 1 m beträgt.

Zusammenfassend kann man die Erfindung so beschreiben, daß zur Erhöhung der Reichweite von Transpondern bei der Anbringung an Metallteilen die Eigenschaften von Metallen und deren spezieller Geometrie geschickt genutzt werden, oder aber eine entsprechende Geometrie der Metallteile, welche die Funktion des betreffenden Metallteiles nicht beeinträchtigt, eigens hergestellt wird und der Transponder dann an geometrisch genau definierten Positionen dieser Metallteile angebracht wird.

Gemäß einem ersten Aspekt führt eine spezielle Anordnung eines Transponders mit Sensorspule an einem Metallteil bzw. das Vorsehen eines entsprechenden Schlitzes in einem Metallteil, wobei der Transponder in der Nähe des Grundes des Schlitzes an der Oberfläche des Metallteils angebracht wird, offenbar dazu, daß, obwohl der Transponder selbst eine Spule als Empfangsantenne aufweist, die primär auf die magnetische Feldkomponente des abfragenden elektromagnetischen Feldes reagiert, das Metallteil selbst als eine Art Dipol-Antenne wirkt, die zwar nicht unmittelbar das elektrische Signal auf den Transponder überträgt, wohl aber einen Strom der entsprechenden Frequenz in dem Metallteil hervorruft, der eine maximale Stromdichte in der Nähe des Schlitzgrundes hat und auf diese Weise auch ein von der Sensorspule erfaßtes Magnetfeld erzeugt. Ohne daß der Schutzumfang der vorliegenden Erfindung durch diese Erklärung in irgendeiner Weise eingeschränkt werden soll, ist dies jedenfalls die vom Erfinder vermutete Wirkungsweise der ersten Variante einer Anordnung und eines Verfahrens gemäß der vorliegenden Erfindung.

Wesentlich ist dabei offenbar, dass die Spule des Transponders außerhalb des Schlitzes an der Oberfläche des Metallteiles angeordnet ist und dabei vorzugsweise den Grund des Schlitzes umfasst, das heißt, die Spule ist nicht im Inneren eines Schlitzes oder einer Grube eines massiven Metallteiles verborgen, sondern befindet sich auf der Metalloberfläche. Die Spulenachse verläuft dabei im wesentlichen senkrecht zur Oberfläche des Metallachse und die Projektion der Spule auf das Metallteil sollte vorzugsweise den unteren Bereich des Schlitzes sowie den Schlitzgrund und einen Abschnitt des darunter liegenden Metallmaterials umfassen bzw. abdecken.

Dabei hat es sich herausgestellt, daß man bei gegebener Sendeleistung besonders günstige Reichweiten dann erzielt, wenn bei Verwendung eines Transponders, der für den Empfang elektromagnetischer Wellen in einem begrenzten Frequenzband ausgelegt ist, der Schlitz in eine sich vom offenen Ende bis zum Grund dieses Schlitzes erstreckende Länge hat, die zwischen einem Viertel und einem Sechstel der Wellenlänge des betreffenden Frequenzbandes liegt.

Beispielsweise liegt ein bevorzugtes Frequenzband für die erfindungsgemäße Transponderanordnung bei 868 MHz und die entsprechende Tiefe eines Schlitzes beträgt dann vorzugsweise in etwa 60 mm. Dies entspricht in etwa 18 % oder etwas mehr als einem Sechstel der entsprechenden Wellenlänge.

Darüber hinaus ist die Anordnung besonders effektiv, wenn das Metallteil ein ebenes oder näherungsweise ebenes, d.h. im wesentlichen zweidimensionales Blech ist, bei welchem sich der Schlitz von einer freien Kante in das Innere des Bleches bis zu einer entsprechenden Tiefe erstreckt, die zwischen einem Viertel und einem Sechstel der Wellenlänge der Abfragefrequenz liegt.

Die Schlitzbreite beträgt bevorzugt zwischen 1 und 10 mm, vorzugsweise 2 bis 6 mm, und insbesondere etwa 4 mm, wobei die Breite des Resonanzbereiches mit der Schlitzbreite zunimmt und 4 mm einen günstigen Kompromiß zwischen Resonanzbreite und Empfindlichkeit darstellt.

Dabei kann der Schlitz ohne weiteres mit einem isolierenden Dielektrikum ausgefüllt oder überbrückt sein, wobei sich in Abhängigkeit von dem Dielektrikum allerdings die bevorzugten Schlitzmaße ändern können. Tendenziell kann der Schlitz kürzer und schmaler ausgestaltet werden, wenn die Dielektrizitätskonstante eines in dem Schlitz vorgesehenen Dielektrikums zunimmt.

Besonders bevorzugt ist eine Anordnung eines Transponders in der Nähe des geschlossenen Endes eines Schlitzes in der Metallfolie einer Blisterverpackung. Die im Allgemeinen ebenen und relativ dünnen Folien einer Blisterverpackung haben offenbar zum einen einen relativ geringen Abschirmeffekt und erzeugen zum anderen eine maximale Stromdichte in engem Abstand zu der Sensorspule.

Die vorliegende Erfindung ist jedoch darüber hinaus auch anwendbar auf sehr unterschiedliche Metallteile, wie z. B. aus Metallblech hergestellte Formteile oder auch auf massive Metallteile, wenn der Transponder in der Nähe einer freien Oberfläche eines solchen Metallteiles angeordnet ist und der Schlitz Abschnitte des Metallteils voneinander trennt, die ansonsten nur über den Grund des Schlitzes miteinander verbunden sind. Die Erfindung funktioniert allerdings auch bei schlitzartigen Durchbrüchen in Metallteilen, wenn beide Enden des Schlitzes geschlossen sind, also effektiv der Schlitz die Form eines Langloches hat.

Günstige Ergebnisse hinsichtlich Reichweite und Empfindlichkeit werden auch erzielt mit einem Transponder, der am Grund eines Schlitzes an der inneren oder äußeren Oberfläche eines Rohres angeordnet ist, wobei der Schlitz sich vorzugsweise von einem freien Ende eines Rohres in Axialrichtung in der Wand des Rohres erstreckt. Der Transponder kann dabei wahlweise auf der Außenseite oder auch auf der Innenseite des Rohres angeordnet sein.

Gemäß dem zweiten Aspekt der Erfindung wird eine ähnliche Wirkung erzielt, wenn die Transponderspule an der freien Kante eines Metallteiles angeordnet wird, ohne daß ein Schlitz vorhanden sein muß, wobei jedoch eine zusätzliche einschränkende Bedingung dahingehend gemacht werden muß, daß die Länge einer solchen freien Kante in einem bestimmten Verhältnis zu der Wellenlänge der zum Auslesen des Transponders vorgesehenen Strahlung stehen muß, nämlich etwa die Hälfte dieser Wellenlänge oder ein ganzzahliges Vielfaches hiervon betragen muß. Da die entsprechenden Transponderfrequenzen national und international standardisiert sind (868 MHz in Europa bzw. 893 MHz in den USA) liegt die erforderliche Länge der freien Kante bei dieser Variante der Erfindung zwischen 16,5 und 17,5 cm oder einem ganzzahligen Vielfachen hiervon..

Gemäß der dritten Variante der Erfindung erfolgt eine kapazitive Ankopplung des Transponderchips an ein Metallteil indem der Chip über einem Spalt oder Schlitz in dem Metallteil angeordnet wird, der wiederum als Dipolantenne wirkt, wobei die Anschlußfahnen des Chips beiderseits des Schlitzes kapazitiv an das Metall bzw. die durch das Metall selbst gebildete Antenne ankoppeln. Die Schlitzbreite ist dabei weniger kritisch, solange nur die Anschlußfahnen beiderseits des Schlitzes dicht über dem Metall angeordnet werden können, wobei nur eine dünne Isolierschicht zwischen Metall und Anschlußfahnen verbleibt. Der Chip wird dabei zweckmäßigerweise entfernt, und zwar vorzugsweise um etwa ein Viertel der oben definierten Wellenlänge, von einem Schlitzgrund angeordnet, wo die lokalen Ladungsträgerdichten am stärksten variieren.

Hinsichtlich des Verfahrens wird die Anwendung insbesondere im UHF-Bereich, d.h. zwischen 500 MHz und 2 GHz bevorzugt, wobei besonders bevorzugt ein für Transponder üblicher Frequenzbereich bei 868 MHz oder 893MHz liegt.

Ein bevorzugter Anwendungsbereich der vorliegenden Erfindung ist die Verwendung an den Metallfolien von Blisterverpackungen für Medikamente. Die entsprechenden Metallfolien, die häufig die Grundplatte entsprechender Blisterverpackungen bilden oder mit denen entsprechende Grundplatten kaschiert sind, werden dementsprechend mit einem von einer freien Kante der Folie ausgehenden, sich möglichst symmetrisch in der Fläche der Folie erstreckenden Schlitz durchzogen, an dessen Grund ein möglichst kompakter, flächiger Transponder mit mindestens einer Windung als Sensorspule angeordnet ist. Die Sensorspule, sofern vorhanden, kann dabei sehr klein sein und nur eine einzige Windung aufweisen, die weniger als 1 cm² und z. B. 0,25 cm² Querschnittsfläche umfaßt.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
- Figur 1: schematisch eine Metallfolie oder ein Metallblech als Grundplatte einer Blisterverpackung, auf welcher ein Transponder angeordnet ist, dessen Sensorspule den Grund des Schlitzes umfaßt,
- Figur 2: ein Rohr, in dessen Wandung ein entsprechender Schlitz eingebracht ist, an dessen Grund ein Transponder angeordnet ist,
- Figur 3: schematisch eine mit einem Transponder ausgerüstete Tankklappe, bei welcher der Transponder in der Nähe des Scharniers angeordnet ist und wobei die Tankklappe zusammen mit den angrenzenden Karosserieteilen im geschlossenen Zustand einen Schlitz definiert, dessen Grund von dem Scharnier gebildet wird.
- Figur 4: die Anordnung eines magnetischen Transponders an einer freien Kante eines Metallblechs,
- Figur 5: eine Figur 4 entsprechende Anordnung an einem Gehäusedeckel wie z. B. einer Tankklappe, und
- Figur 6: Die kapazitive Ankopplung eines Transponderchips mit Lötfahnen an dem offenen Ende eines Schlitzes in einer Metallplatte oder -Folie

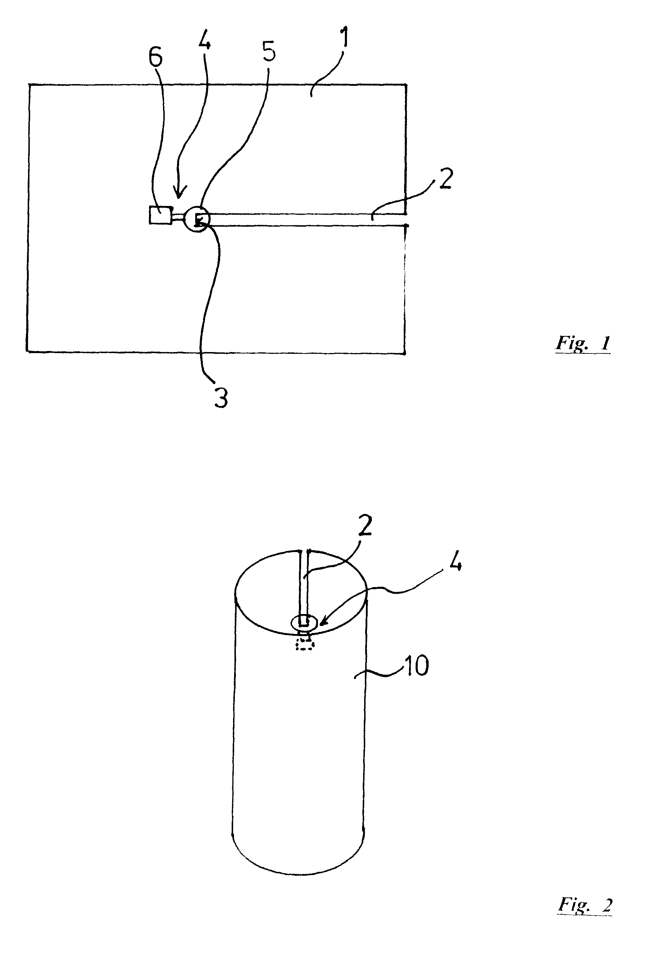

Man erkennt in Figur 1 schematisch eine als Rechteck dargestellte Metallfolie 1, die beispielsweise den Grund einer Blisterpackung bildet. Von einer Kante bzw. Seite dieser Metallfolie 1 aus ist ein Schlitz 2 in die Folie eingebracht, der an einem Ende offen ist und am anderen Ende einen Grund 3 aufweist. Ein schematisch dargestellter Transponder 4 mit einer Chipelektronik 6 zur Aufnahme eines Codes ist in der Nähe des Schlitzgrundes 3 angeordnet und zwar in der Weise, daß eine schematisch dargestellte Spule 5 den Grund 3 des Schlitzes 2 umfaßt oder zumindest in der Nähe dieses Grundes 3 angeordnet ist. Dabei verläuft die Achse der Spulenwindung 5 im Wesentlichen senkrecht zu der Oberfläche der Metallfolie 1 und senkrecht zur Längserstreckung des Schlitzes 2 in der Oberfläche. Diese Anordnung der Spule ist unabhängig von der Dicke der Folie oder des Metallteils und wäre in entsprechender Weise auch bei einem massiven Metallteil an der Oberfläche desselben mit der Spulenachse senkrecht zu dieser Oberfläche angeordnet. Dabei kann es jedoch zweckmäßig sein, wenn an der Oberfläche des betreffenden Metallteiles eine flache Vertiefung zur bündigen Aufnahme eines Transponders vorgesehen ist, so daß der Transponder nicht über die jeweilige Oberfläche hervorsteht und gegenüber Beschädigungen oder einem beabsichtigten oder aber unabsichtlichen Abstreifen besser geschützt ist.

Die Spule kann aus nur einer einzigen ebenen Windung, ggf. auch aus mehreren und z. B. 5 Windungen bestehen, die aber vorzugsweise innerhalb einer Ebene liegen, damit der Transponder 4 insgesamt möglichst flach ist und nicht oder nur sehr wenig über die Oberfläche der Folie 1 hervorsteht. Der Schlitz 2 ist vorzugsweise in etwa 60 mm lang und 4 mm breit, wobei die Darstellung in Figur 1 nicht maßstabsgetreu ist.

Figur 2 zeigt als eine weitere Variante die Anordnung eines Transponders 4 im Inneren eines Metallrohres 10. Eine freie Kante des Metallrohres weist wiederum einen Schlitz 2 auf, an dessen Grund auf der Innenseite des Rohres 10 ein Transponder 4 angeordnet ist. Der Transponder könnte auch auf der Außenfläche des Rohres 10 angeordnet sein. Auch hier verläuft die Achse der Windung des Transponders im wesentlichen senkrecht zur Oberfläche des Metallrohres in dem Bereich, in welchem der Transponder 4 angeordnet ist. Der Schlitz 2 kann beispielsweise mit einer Säge eingebracht werden und braucht lediglich die Breite des Sägeblattes aufzuweisen.

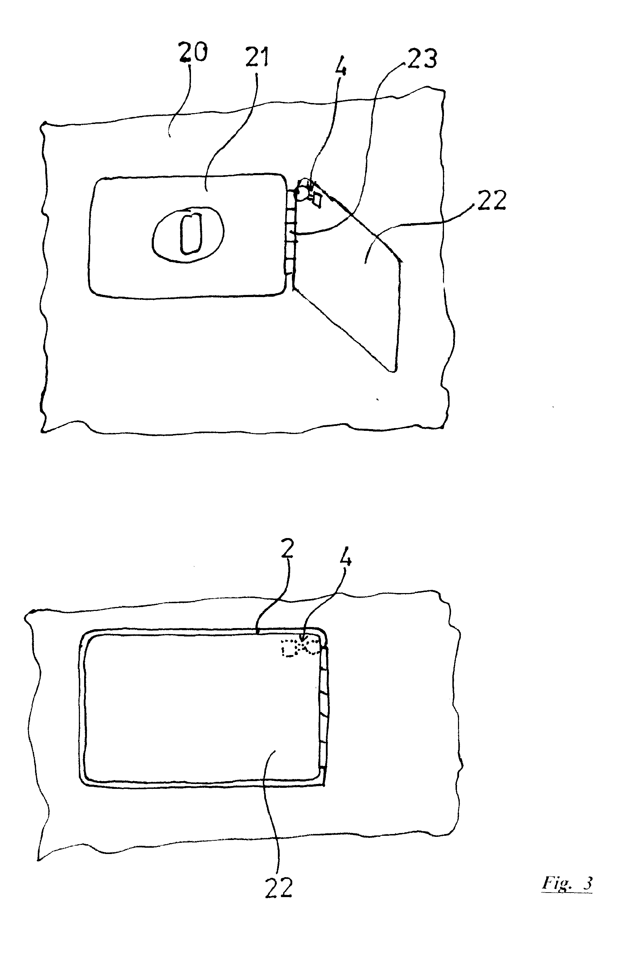

Figur 3 zeigt eine weitere Variante der Anordnung eines Transponders, welcher hier in einer schematischen Darstellung an einer Klappe 22 angeordnet ist, die beispielsweise die Tankklappe eines Autos sein kann. Die ausschnittsweise dargestellte Karosserie des Autos ist mit 20 bezeichnet und weist eine Tankzugangsöffnung 21 mit einem Tankstutzen auf, wobei die Tankzugangsöffnung 21 durch die Klappe 22 verschließbar ist und wobei die Klappe 22 über ein Scharnier 23 an einem Rand der Öffnung 21 mit der Karosserie 20 verbunden ist. Ein Transponder 4 ist in der Nähe des oberen Endes des Scharniers an der Innenfläche der Tankklappe 22 angeordnet. Im geöffneten Zustand ist nur ein sehr kurzer Schlitz vorhanden, der in der Nähe des Transponders an der Oberseite des Scharniers endet. Im geschlossenen Zustand jedoch, wie es im unteren Teilbild der Figur 3 dargestellt ist, bildet der Spalt zwischen der Tankklappe 22 und dem Rand der Öffnung 21 einen Schlitz 2, der in ähnlicher Weise wirkt wie die Schlitze 2 in den Ausführungsformen der Figuren 1 und 2, so daß in diesem Zustand der Transponder 4 eine deutlich vergrößerte Reichweite in der Größenordnung von z. B. 1 m oder darüber hat, während im geöffneten Zustand der Klappe 22 der Transponder 4 nur eine sehr geringe Reichweite von weniger als 20 cm hat.

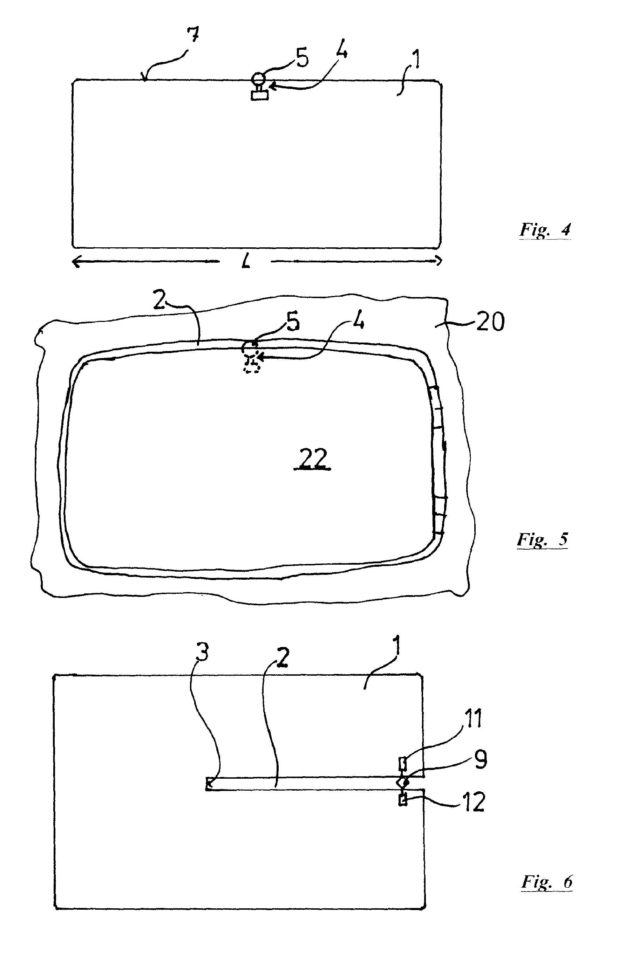

Figur 4 zeigt eine weitere Variante der Erfindung bei welcher ein Transponder an der freien Kante 7 eines Metallteiles 1 angebracht ist, wobei die schematisch dargestellte Spule 5 über die Kante 7 des Metallteiles 1 hinausragt. Die Länge L dieser freien Kante 7 des Metallteiles beträgt dabei vorzugsweise zwischen 16,5 und 17,5 cm. Der Transponder 4 ist, bezogen auf die Länge L, etwa in der Mitte einer solchen Kante 7 angebracht.

Figur 5 zeigt eine Variante hierzu, wobei die freie Kante 7 die Kante einer Tankklappe 22 an einem Kraftfahrzeug ist, dessen freie Kante eine typische Länge in dem bevorzugten Bereich hat, wobei es in diesem Fall jedoch hierauf weniger ankommt, da zwischen Tankdeckel 22 und Einfassung 22 des Deckels durch die entsprechende Aussparung in der Karosserie ein Schlitz 2 gebildet wird, der sich signalverstärkend auswirkt.

Figur 6 zeigt schließlich die dritte Variante, bei welcher ein Transponder ebenfalls an einem Schlitz 2 angeordnet ist, in diesem Fall jedoch das offene Ende eines Schlitzes überbrückt, indem an einem Transponderchip 9 vorgesehene Lötfahnen 11, 12 beiderseits des Schlitzes 2 auf dem Metall 1, jedoch gegenüber diesem isoliert angebracht werden. dieser Chip hat keinerlei Antenne, abgesehen von dem Metallteil selbst, das kapazitiv an die Lötfahnen 11, 12 ankoppelt, wobei die Anordnung am freien Ende des Schlitzes 2, vorzugsweise in einem Abstand vom Schlitzgrund 3, der zwischen 50% und 150% eines Viertels der verwendeten Wellenlänge liegt, erfolgt.

Die Figuren 1 bis 6 zeigen den bereiten Anwendungsbereich der vorliegenden Erfindung und veranschaulichen unter anderem die breite Bedeutung des Begriffs "Schlitz", wie er im Rahmen der vorliegenden Erfindung verwendet wird. Auch wenn die Erfindung hier nur in Verbindung mit wesentlichen flächigen metallischen Elementen, insbesondere mit aus Metallblechen hergestellten Elementen dargestellt ist, ist die Erfindung dennoch auch auf massivere Metallteile anwendbar, wobei allerdings darauf zu achten ist, daß der Transponder nicht im Inneren eines massiven Bauteils, also auch nicht im Inneren eines sich in das Bauteil erstreckenden Schlitzes angebracht werden kann, sondern immer am Ende des Schlitzes im Bereich der Oberfläche eines entsprechenden metallischen Bauteils angebracht werden muß, wobei der Schlitz auch eindeutig entsprechende Abschnitte des Bauteils voneinander trennen muß. Alternativ ist es jedoch auch möglich, daß der Schlitz, beispielsweise in einer Anordnung ähnlich der Figur 1, an beiden Enden geschlossen ist, wobei der Schlitz sowohl länger als auch kürzer sein kann als in Verbindung mit Figur 1 dargestellt und beschrieben Abweichungen von den bevorzugten Maßen und Ausgestaltungen des Schlitzes 2 mögen zwar die Reichweite etwas verringern, ändern aber nichts an der grundsätzlichen Wirkungsweise der Erfindung und an dem durch einen solchen Schlitz erzielten Verstärkungseffekt gegenüber einer Anordnung des Transponders an einer beliebigen anderen Position eines metallischen Bauteils.

## Patentansprüche

1. Anordnung eines mindestens eine Sensorspule aufweisenden Transponders an einem metallischen Gegenstand, **dadurch gekennzeichnet, daß** der Transponder gemäß einer der drei folgenden Varianten an einer freien Kante des Metallteiles angebracht ist:
a) indem die Sensorspule an einer Oberfläche des Metallteiles im Bereich des geschlossenen Endes eines sich in und entlang der Oberfläche des Metallteiles erstreckenden Schlitzes angeordnet ist
b) indem die Sensorspule in der Mitte einer freien Kante des Metallteiles derart angeordnet ist, daß die Querschnittsfläche der Sensorspule die freie Kante überlappt, wobei die Länge der freien Kante in etwa die Hälfte der Wellenlänge der für das Auslesen verwendeten Elektromagnetischen Wellen oder ein ganzzahliges Vielfaches hiervon beträgt
c) indem ein Transponderchip, der zwei elektrisch leitende Anschlußfahnen aufweist, jedoch ohne Antenne oder Empfangsspule über einem durchgehenden Schlitz angeordnet ist, wobei die beiden Anschlußfahnen des Transponderchips beiderseits des Schlitzes unmittelbar auf der Metalloberfläche jedoch gegenüber dieser Metalloberfläche isoliert angebracht ist

2. Transponderanordnung nach Anspruch 1, **dadurch gekennzeichnet, daß** der Transponder für den Empfang elektromagnetischer Wellen in einem begrenzten Frequenzband ausgelegt ist, wobei der Schlitz eine Länge hat, die zwischen ein Viertel und ein Sechstel der Wellenlänge des betreffenden Frequenzbandes liegt.

3. Transponderanordnung nach Anspruch 1 oder 2, **dadurch gekennzeichnet, daß** das Frequenzband bei 868 MHz liegt und die Tiefe bzw. Länge des Schlitzes ca. 60 mm beträgt.

4. Transponderanordnung nach einem der Ansprüche 1 bis 3, **dadurch gekennzeichnet, daß** das Metallteil ein Blech ist,

5. Transponderanordnung nach Anspruch 4, **dadurch gekennzeichnet, daß** das Blech einen zu einer seitlichen Kante des Bleches offenen Schlitz aufweist, an dessen geschlossenem Ende der Transponder bzw. dessen Sensorspule angeordnet ist.

6. Transponder nach einem der Ansprüche 1 bis 5, **dadurch gekennzeichnet, daß** die Schlitzbreite zwischen 1 und 10 mm, vorzugsweise zwischen 2 und 6 mm und insbesondere ca. 4 mm beträgt.

7. Transponder nach einem der Ansprüche 1 bis 6, **dadurch gekennzeichnet, daß** der Schlitz mit einem Dielektrikum ausgefüllt bzw. überbrückt ist.

8. Transponderanordnung nach einem der Ansprüche 1 bis 7, **dadurch gekennzeichnet, daß** der Schlitz in der Metallfolie einer Blisterpackung vorgesehen ist.

9. Transponderanordnung nach einem der Ansprüche 1 bis 8, **dadurch gekennzeichnet, daß** der Schlitz als Durchbruch in einem aus Metall hergestellten Formteil ausgebildet ist.

10. Transponderanordnung nach einem der Ansprüche 1 bis 9, **dadurch gekennzeichnet, daß** der Schlitz in Axialrichtung in der Wand eines Rohres verläuft.

11. Transponderanordnung nach einem der Ansprüche 1 bis 9, **dadurch gekennzeichnet, daß** der Schlitz eine variable Breite hat und insbesondere durch zwei über ein Scharnier miteinander verbundene Metallteile gebildet wird, wobei der Transponder in der Nähe des Scharniers angeordnet ist.

12. Transponderanordnung nach einem der vorstehenden Ansprüche, **dadurch gekennzeichnet, daß** die Spulenachse des Transponders in etwa senkrecht zur Oberfläche des den Schlitz und insbesondere den Schlitzgrund aufweisenden Abschnittes des Metallteiles angeordnet ist.

13. Verfahren zum Anordnen und Betreiben eines Transponders an metallischen Objekten, aß der Transponder gemäß einer der drei folgenden Varianten an einer freien Kante des Metallteiles angebracht wird:
a) indem die Sensorspule an einer Oberfläche des Metallteiles im Bereich des geschlossenen Endes eines sich in und entlang der Oberfläche des Metallteiles erstreckenden Schlitzes angeordnet wird
b) indem die Sensorspule in der Mitte einer freien Kante des Metallteiles derart angeordnet wird, daß die Querschnittsfläche der Sensorspule die freie Kante überlappt, wobei die Länge der freien Kante in etwa die Hälfte der Wellenlänge der für das Auslesen verwendeten Elektromagnetischen Wellen oder ein ganzzahliges Vielfaches hiervon beträgt
c) indem ein Transponderchip, der zwei elektrisch leitende Anschlußfahnen aufweist, jedoch ohne Antenne oder Empfangsspule über einem durchgehenden Schlitz angeordnet wird, wobei die beiden Anschlußfahnen des Transponderchips beiderseits des Schlitzes unmittelbar auf der Metalloberfläche jedoch gegenüber dieser Metalloberfläche isoliert angebracht werden

14. Verfahren nach Anspruch 13, **dadurch gekennzeichnet, daß** der Transponder über eine Antenne angesteuert wird, deren Abstand mindestens 50 cm und vorzugsweise mindestens 1 m zu dem Transponder beträgt.

15. Verfahren nach Anspruch 13 oder 14, **gekennzeichnet durch** die Anwendung des Verfahrens auf Blisterverpackungen, insbesondere von Medikamenten.

16. Verfahren nach einem der Ansprüche 13 oder 14, **gekennzeichnet durch** die Anwendung auf metallische Komponenten im Automobilbau.
